# EUROPEAN PATENT SPECIFICATION

(11) **EP 3 162 159 B1**
(45) Date of publication and mention of the grant of the patent: **15.01.2020**
(21) Application number: 14895624.6
(22) Date of filing: 25.06.2014
(51) Int. Cl.: H04W 74/08

(54) **METHOD AND DEVICE FOR ULTRA-DENSE NETWORK**
VERFAHREN UND VORRICHTUNG FÜR ULTRADICHTES NETZWERK
PROCÉDÉ ET DISPOSITIF POUR RÉSEAU ULTRA-DENSE

(43) Date of publication of application: 03.05.2017
(73) Proprietor: Telefonaktiebolaget LM Ericsson (publ), 164 83 Stockholm (SE)
(72) Inventor: LU, Qianxi, Beijing 100102 (CN); FAN, Rui, Beijing 100018 (CN)
(74) Representative: Zacco Sweden AB
(86) International application number: PCT/CN2014/080728
(87) International publication number: WO 2015/196387

(56) References cited:
- WO-A2-2010/074401
- CN-A- 102 548 015
- CN-A- 103 733 697
- US-A1- 2013 294 418
- PREBEN MOGENSEN ET AL: "Centimeter-Wave Concept for 5G Ultra-Dense Small Cells", 2014 IEEE 79TH VEHICULAR TECHNOLOGY CONFERENCE (VTC 2014-SPRING) : SEOUL, KOREA, 18 - 21 MAY 2014, 18 May 2014 (2014-05-18), pages 1-6, XP55356370, Piscataway, NJ DOI: 10.1109/VTCSpring.2014.7023157 ISBN: 978-1-4799-4482-8

## Description

### TECHNICAL FIELD

The present technology generally relates to radio communication, particularly to a method for ultra-dense network and the device thereof.

### BACKGROUND

The ultimate goal of mobile broadband should be the ubiquitous and sustainable provision of non-limiting data rates to everyone and everything at every time.

Network densification along with universal resources reuse is expected to play a key role in the realization of 5G radio access as an enabler for delivering most of the anticipated network capacity improvements. On the one hand, neither the expected additional spectrum allocation nor the forthcoming novel air-interface processing techniques will be sufficient for sustaining the anticipated exponentially-increasing mobile data traffic.

Along this path, we believe Ultra-Dense Networks (UDN) are an important next step following the successful introduction of LTE-A for wide-area and local-area access. Even though only a local-area access technology, UDN can be deployed in areas with high traffic consumption and thus provide an important step towards the above goal. Through sufficient provision and the related low average loads in the access network, UDN create ubiquitous access opportunities which - even under realistic assumption on user density and traffic - provide users with the desired data rates.

In a UDN, sufficient provision is achieved by an extremely dense grid of access nodes; inter-access-node distances in the order of tens of meters and below are envisioned, in indoor deployments one or even multiple access nodes are conceivable in each room.

While Long Term Evolution-Advanced (LTE-A) development continues strongly within 3GPP Release 11 and 12 standardization, a discussion on a 5G system improved on existing LTE-A has also been opened, and problems arise in different aspects, including the access signaling aspect of LTE-A towards 5G. The document titled "Centimeter-wave concept for 5G Ultra-Dense small cells" provided by PREBEN MOGENSEN ET.AL., at 2014 IEEE 79th Vehicular Technology conference (VTC 2014-spring) Seoul Korea, published on 18-21 May 2014, describes a background art of components for 5G Centimeter-wave concept for Ultra-Dense small cells.

### SUMMARY

The invention is defined by the independent claims. Furthermore, embodiments of the invention are defined by the claims. Therefore, it is an object to solve the above-mentioned problem.

According to one aspect, there is provided a method for a user equipment in an ultra-dense network, comprising: sending a request to a radio base station for resources to be granted for uplink transmission, the request being of a same physical layer format regardless of the user equipment being connected with the RBS or not; receiving a response indicating granted resources for the uplink transmission, the response omitting timing information which is used for the RBS to correctly decode data to be uplink transmitted; performing the transmission on the granted resources when they are available.

According to another aspect, there is provided a user equipment, in an ultra-dense network, comprising: a first output unit, configured to send a request to a radio base station, RBS, for resources to be granted for uplink transmission, the request being of a same physical layer format regardless of the user equipment being connected with the RBS or not; a first input unit, configured to receive a response indicating granted resources for the uplink transmission, the response omitting timing information which is used for the RBS to correctly decode data to be uplink transmitted ; a second output unit, configured to perform the transmission on the granted resources when they are available.

As a whole or by scenario, it is advantageous to make unification for the physical layer format of the request for granted uplink resources and uplink timing alignment omission, both of which contribute to system simplification.

### BRIEF DESCRIPTION OF THE DRAWINGS

The technology will now be described, by way of example, based on embodiments with reference to the accompanying drawings, wherein:
Fig. 1 illustrates a schematic view of the environment in which embodiments are implemented;
Fig. 2 illustrates a block diagram of a UE in accordance with embodiments of the present invention;
Fig. 3 illustrates a flowchart of a method performed in a UE in accordance with embodiments of the present invention;
Fig. 4 illustrates a block diagram of an RBS in accordance with embodiments of the present invention;
Fig. 5 illustrates a flowchart of a method performed in an RBS in accordance with embodiments of the present invention;
Fig. 6 illustrates a hardware block diagram of entities in accordance with embodiments of the present invention;
Fig. 7 illustrates a signaling process between a UE and an RBS in accordance with embodiments of the present invention;
Fig. 8 illustrates another signaling process between a UE and an RBS in accordance with embodiments of the present invention.
Fig. 9 illustrates time-frequency resources evolvement in accordance with embodiments of the present invention;
Fig. 10 illustrates signaling message evolvement in accordance with embodiments of the present invention.

### DETAILED DESCRIPTION

Embodiments herein will be described in detail hereinafter with reference to the accompanying drawings, in which embodiments are shown. These embodiments herein may, however, be embodied in many different forms and should not be construed as being limited to the embodiments set forth herein. The elements of the drawings are not necessarily to scale relative to each other. Like numbers refer to like elements throughout.

The terminology used herein is for the purpose of describing particular embodiments only and is not intended to be limiting. As used herein, the singular forms "a", "an" and "the" are intended to include the plural forms as well, unless the context clearly indicates otherwise. It is understood that blocks of the block diagrams and/or flowchart illustrations, and combinations of blocks in the block diagrams and/or flowchart illustrations, may be implemented by computer program instructions. These computer program instructions may be provided to a processor, controller or controlling unit of a general purpose computer, special purpose computer, and/or other programmable data processing apparatus to produce a machine, such that the instructions, which execute via the processor of the computer and/or other programmable data processing apparatus, create means for implementing the functions/acts specified in the block diagrams and/or flowchart block or blocks.

Accordingly, the present technology may be embodied in hardware and/or in software (including firmware, resident software, micro-code, etc.). Furthermore, the present technology may take the form of a computer program product on a computer-usable or computer-readable storage medium having computer-usable or computer-readable program code embodied in the medium for use by or in connection with an instruction execution system. In the context of this document, a computer-usable or computer-readable medium may be any medium that may contain, store, communicate, propagate, or transport the program for use by or in connection with the instruction execution system, apparatus, or device.

Embodiments herein will be described below with reference to the drawings.

Hereinafter, the embodiments will be described in the context of LTE-A based ultra-dense network. However, such description is only exemplary, rather than restrictive, and the embodiments are also applicable to other types of network which exist for the present or will exist in the future as appropriate as long as it is adaptable for an ultra-dense network.

An ultra-dense network 100 includes a plurality of densely deployed radio base stations (RBSs) 101. For example, and for sake of simplicity, four RBSs 101 are shown.

Here, the connections between RBSs 101 may be implemented in a wired or wireless way, or combination thereof.

Further, those skilled in the art will also appreciate that an RBS 101 is sometimes also referred to in the art as a base station, a macro base station, a femto base stations, a node B, or B-node, an eNodeB, etc., besides, also other transceivers or wireless communication stations used to communicate with the user equipment (UE) 102.

In the illustrated environment, for sake of simplicity, each RBS 101 is shown as serving one cell. Each cell is represented by a circle which surrounds the respective RBS 101. It will be appreciated by those skilled in the art, however, that an RBS 101 may serve for communicating across the air interface for more than one cell. For example, two cells may utilize resources situated at the same RBS site.

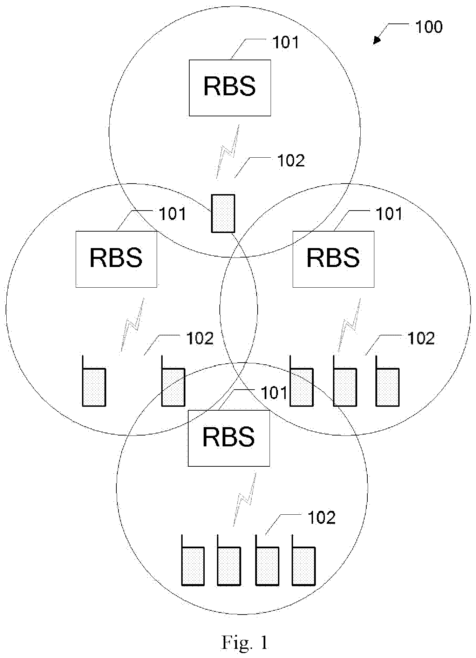

A UE, such as the UE 102 shown in Fig. 1, communicates with one cell or one RBS 101 over an air interface. For simplicity and clarity, there are sets of 1, 2, 3, and 4 UE(s), each set within a range of a cell, communicating with a corresponding RBS of the cell respectively. It will be appreciated that different numbers of UEs may be served by cells and the numbers served by different cells need not to be identical. The term "UE" used herein may indicate all forms of devices enabled to communicate via a communication network, such as mobile telephones ("cellular" telephones) and laptops with mobile termination, and thus can be, for example, portable, pocket, hand-held devices, such as mobile phones, smart phones, personal digital assistants (PDA); computer-included devices, such as desktops, laptops; vehicles, or other devices, such as meters, household appliances, medical appliances, multimedia devices, etc., which communicate voice and/or data with radio access network.

Different types of channels may exist between the RBSs 101 and UEs 102 for transport of different kinds of control and user data. For example, there can be physical uplink control channel (PUCCH), physical downlink control channel (PDCCH), physical random access channel (PRACH), physical downlink shared channel (PDSCH), etc. In existing LTE-A system, those channels occupy different time and frequency resources.

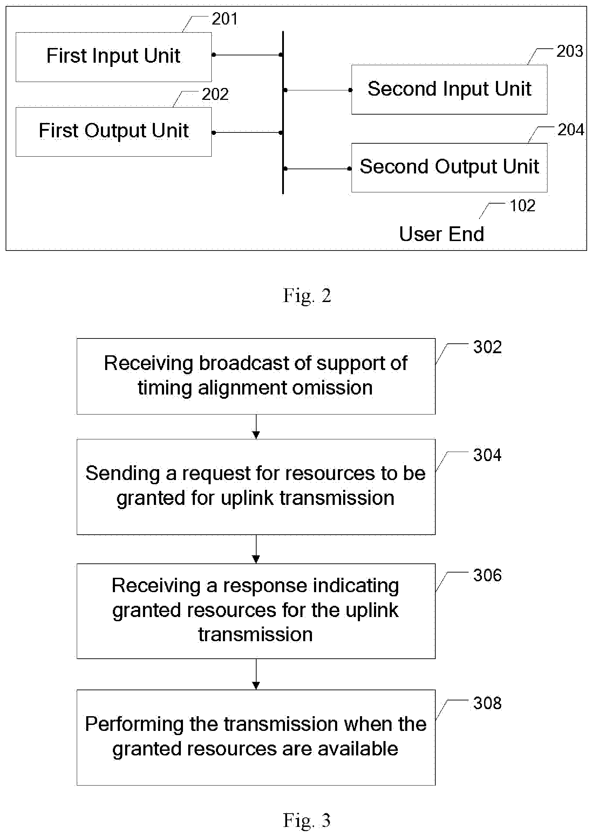

Fig. 2 illustrates a block diagram of a UE in accordance with embodiments of the present invention.

In Fig. 2, the UE 102 comprises a first input unit 201, a first output unit 202, a second input unit 203 and a second output unit 204. It should be appreciated that the UE 102 is not limited to the shown elements, and can comprise other conventional elements and additional elements implemented for other purposes.

The first output unit 202 is configured to send a request to an RBS 101, for resources to be granted for uplink transmission for the UE 102 transmitting to the RBS 101. The first input unit 201 is configured to receive a response correspondingly. The second output unit 204 is configured to perform the transmission on the granted resources when they are available. The second input unit 203 is configured to receive a broadcast message indicating omission of uplink timing alignment is supported before the first output unit sending the request for resources granted for uplink transmission.

The elements 201-204 are illustrated as separate elements in Fig. 2. However, this is merely to indicate that the functionalities are separated. The elements can be provided as separate hardware devices. However, other arrangements are possible, such as the first input unit 201 and the second input unit 203 can be physically combined as one unit. Any combination of the elements can be implemented in any combination of software, hardware, and/or firmware in any suitable location. For example, there may be more input units or output units configured separately, or just one input unit and one output unit, or one or more transceivers for both output and input.

The elements may constitute machine-executable instructions embodied within a machine, e.g., readable medium, which when executed by a machine will cause the machine to perform the operations described. Besides, any of the elements may be implemented as hardware, such as an application specific integrated circuit (ASIC), Digital Signal Processor (DSP), Field Programmable Gate Array (FPGA) or the like.

Besides, it should be understood that the arrangements described herein are set forth only as examples. Other arrangements and elements (e.g., more input units, more output units, transceivers, etc.) can be used in addition to or instead of those shown, and some elements may be omitted altogether.

Functionalities and cooperation between those elements are described in detail with reference to Fig. 3.

Fig. 3 illustrates a flowchart of a method performed in a UE in accordance with embodiments of the present invention. In step 302, the UE 102 receives a broadcast message, for example, through the second input unit 203, indicating that the RBS 101 can provide or is providing services waived of uplink timing alignment. The broadcast message includes, for example, a revised information element (IE) *prach-Config* in system information block (SIB) information, which includes a Boolean field of *simplified-PRACH.* By reading this field, the UE knows that it can follow the simplified procedure, which means uplink timing alignment can be omitted. In the LTE-A system, the uplink timing alignment requires an inter-symbol interference (ISI) and an inter-carrier interference (ICI). The ISI and ICI intend to prevent time-dispersive channel propagation by adjusting uplink timing of different UEs to be within an allocated cyclic prefix (CP) of each OFDMA symbol. While in UDN environment, because of density of access points, CP duration exceeds the round trip time (two times of propagation delay).

In step 304, the UE 102 sends a request to the broadcasting RBS 101, for example, through the first output unit 202, for resources granted for uplink transmission for the UE. In one example, the UE 102 is connected with the broadcasting RBS 101 and thus is identifiable by the RBS 101. Otherwise, the UE 102 is not connected with the broadcasting RBS 101 and thus is not identifiable by the RBS 101. In both cases, physical layer formats of the requests sent by the UE 102 may be the same.

Generally, the physical layer format of the request at least comprises an encoded sequence for identifying the UE 102.

In an example, a scheduling request (SR) of the existing LTE-A system may be used. In another example, a random access channel (RACH) preamble of the existing LTE-A system may be used, regardless of the UE 102 being connected with the broadcasting RBS 101 or not. Both SR and RACH preamble have schemes for identifying the UE 102 in existing LTE-A system, for example, through sequences.

In step 306, the UE receives a response from the broadcasting RBS 101, for example, through the first input unit 201, indicating resources granted for the uplink transmission. However, timing information that should be contained in the response in existing LTE-A system for the broadcasting RBS 101 to correctly decode data to be uplink transmitted is omitted, and the time uncertainty due to the propagation delay is compensated within a CP. A timing advance (TA) procedure in existing LTE-A system that ensures the signals sent by multiple UEs being aligned for the RBS 101 to correctly decode data to be uplink transmitted is omitted.

It should be appreciated that physical layer format of the response may be varied, depending on connection status of the UE 102 and the RBS 101.

Generally, the physical layer format of the response comprises at least information about uplink resources granted for the UE's transmission. Additionally, if the UE 102 is not connected with the RBS 101, i.e., the RBS 101 doesn't have the information such as identification or location information of the UE 102 thus can't identify the UE 102, then the physical layer format of the response further comprises an identification allocated for the UE 102. The identification could apply radio network temporary identity (RNTI) values in existing LTE-A system. Furthermore, the uplink resource granted for the UE 102 in the response is applied by the UE 102 for controlling signallings of connection setup.

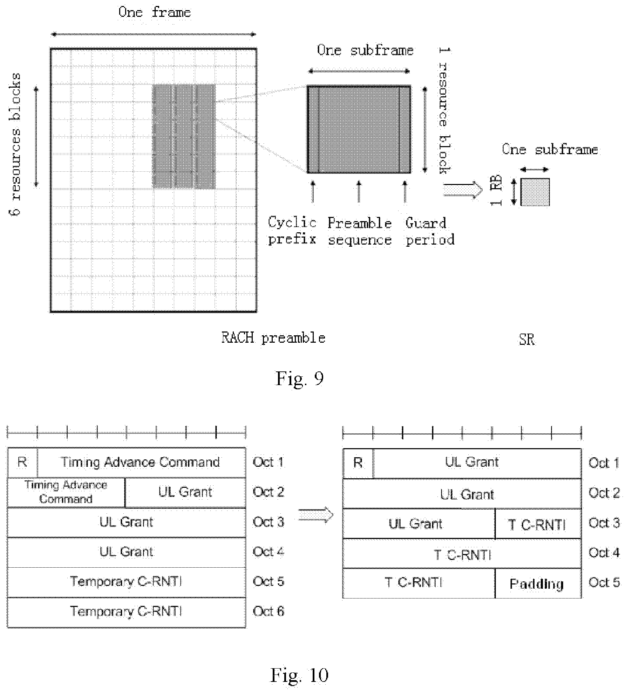

In one embodiment, when the UE 102 is not connected with the RBS 101, i.e., the RBS 101 can't identify the UE 102, the physical format of the response may be simplified version of a legacy random access response (RAR), omitting "Timing Advance Command" in it as is in the existing LTE-A system, as is shown in Fig. 10. After receiving the response (in the following step 308), the UE 102 would continue the legacy procedure, by applying the uplink resource which is allocated to the UE 102 indicated in the response, such as the legacy procedure of authentication and authorization, then get connected with the RBS 101.

In another embodiment, when the UE 102 is connected with the RBS 101, i.e., the RBS 101 can uniquely identify the UE 102, and then the physical format of the response may be that of a response to an SR as is in the existing LTE-A system.

It should be appreciated that the request is not limited to the physical format of a scheduling request or a RACH preamble. Other formats of request for uplink resource would apply as appropriate, as long as for example it comprises a sequence for identifying the UE, such as a simplified version of an RACH preamble, for example omitting guard period or shortening the preamble sequence. It should be appreciated that the response is not limited to the response to an SR or simplified RAR. Other formats of response for uplink resource would apply as appropriate, as long as for example it at least comprises the uplink resources granted for the UE.

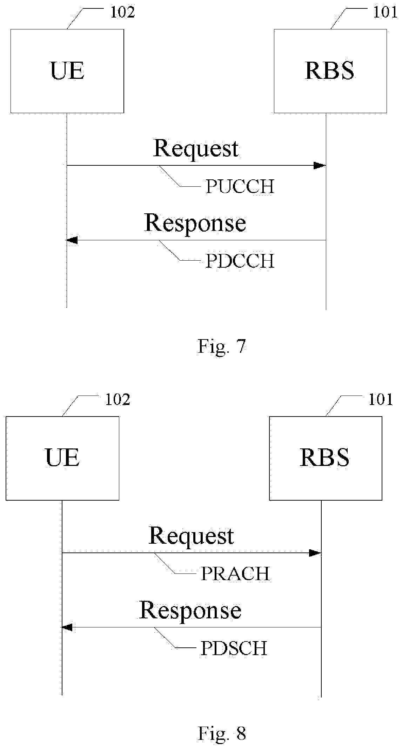

In an embodiment, as is shown in Fig. 7, when the UE 102 is already connected with the RBS 101, i.e., the RBS 101 may uniquely identify the UE 102, the request is of the physical layer format of, for example, an SR, and the request is sent on a PUCCH as in the existing LTE-A system. In particular, request is of the physical layer format of PUCCH format 1 (including PUCCH format 1/1a/1b) and PUCCH format 3, as is in existing LTE-A system, using time and frequency resources of those of an SR. Accordingly, the response is of the physical layer format of, for example, a response to a scheduling request and sent on a PDCCH, as is in the existing LTE-A system, using time and frequency resources of, for example, a response to a scheduling request.

In another embodiment, as is shown in Fig. 8, when the UE 102 is not connected with the RBS 101 yet, i.e., the RBS 101 can't identify the UE 102, the request is of the physical layer format of, for example, a RACH preamble and sent on a PRACH in the existing LTE-A system, using time and frequency resources of, for example, a RACH preamble. Accordingly, the response is of the physical layer format of, for example, a random access response (RAR) but omitting "Timing Advance Command" in it, as is shown in Fig. 10, and can be sent on a physical downlink shared channel (PDSCH), as is in the existing LTE-A system, using time and frequency resources of, for example, an RAR.

It should be appreciated that other newly developed messages can be applied for the request and response, as indicated before, and their formats could be further unified. Time and frequency resources taken for those request and response may be adjusted accordingly, which preferably can help the RBS to identify whether the UE is connected with it or not.

Then in step 308, the UE 102 may perform transmissions on the granted resources, for example, through the second output unit 204, when they are available, for example, when a contention among UEs for those resources is resolved, if any, or when those resources are contention free.

As discussed above, the TA procedure in existing LTE-A system may be omitted, thus the embodiments described herein will not comprise a TA command of existing LTE-A system sent from the RBS 101 to the UE 102. Besides, other configurations or settings, such as timer setting in both the RBS 101 and the UE 102 for uplink timing alignment in existing LTE-A system is also omitted. In a word, uplink timing alignment is omitted, and thus the system complexity is reduced and system efficiency is enhanced accordingly.

To sum up, unification for the physical layer format of the request for granted uplink resources and uplink timing alignment omission both contribute to system simplification.

Furthermore, as is shown in Fig. 9, physical layer format of a legacy RACH preamble comprises a cyclic prefix, a preamble sequence and a guard period. A simplified format may comprise cyclic prefix and a shortened preamble sequence, in which way the signaling overheads are diminished. What's more, a legacy RACH preamble will take 6 resource blocks in frequency domain, and up to 3 subframes in time domain. An SR would only take 1 resource block and 1 subframe. We can see from Fig. 9 that, time and frequency resources taken by an SR is much less than those of aa legacy RACH preamble. In existing LTE-A system, the UE 102 has to take an RACH procedure if it is uplink unsynchronized, even if it is connected with the RBS 101. According to the present invention, in such a scenario, the UE 102 may send a request, for example with the physical layer format of a scheduling request or a simplified RACH preamble for granted uplink resources, using time and frequency resources of an SR instead. It is therefore advantageous in such an embodiment of the present invention to make such a request for granted uplink resources instead of following a legacy RACH procedure. Time and frequency resources for sending the request for uplink granted resources are reduced.

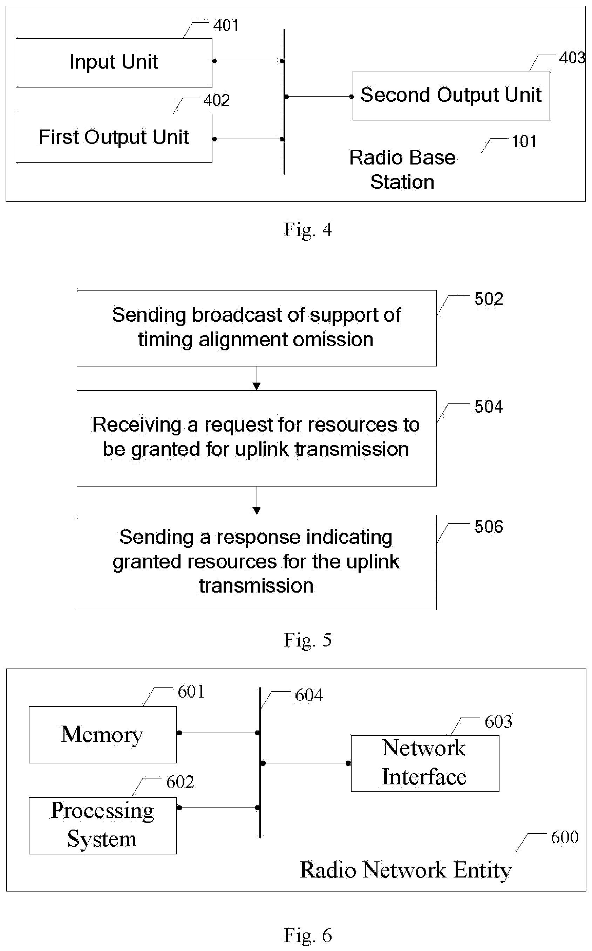

Fig. 4 illustrates a block diagram of an RBS in accordance with embodiments of the present invention.

In Fig. 4, the RBS 101 comprises an input unit 401, a first output unit 402, and a second output unit 403. It should be appreciated that the RBS 101 is not limited to the shown elements, and can comprise other conventional elements and additional elements implemented for other purposes.

The input unit 401 is configured to receive a request from a UE 102, for resources to be granted for uplink transmission for the UE 102 transmitting to the RBS 101. The first output unit 402 is configured to send a response correspondingly. The second output unit 403 is configured to send a broadcast message indicating omission of uplink timing alignment is supported.

The elements 401-403 are illustrated as separate elements in Fig. 4. However, this is merely to indicate that the functionalities are separated. The elements can be provided as separate hardware devices. However, other arrangements are possible. Any combination of the elements can be implemented in any combination of software, hardware, and/or firmware in any suitable location. For example, there may be more input units or output units configured separately, or just one input unit and one output unit, or one or more transceivers for both output and input.

The elements may constitute machine-executable instructions embodied within a machine, e.g., readable medium, which when executed by a machine will cause the machine to perform the operations described. Besides, any of the elements may be implemented as hardware, such as an application specific integrated circuit (ASIC), Digital Signal Processor (DSP), Field Programmable Gate Array (FPGA) or the like.

Besides, it should be understood that this and other arrangements described herein are set forth only as examples. Other arrangements and elements (e.g., more input units, more output units, transceivers, etc.) can be used in addition to or instead of those shown, and some elements may be omitted altogether.

Functionalities and cooperation between these elements are described in detail with reference to Fig. 5.

Fig. 5 illustrates a flowchart of a method performed in an RBS in accordance with embodiments of the present invention. In step 502, The RBS 101 sends a broadcast message, for example, through the second output unit 403, indicating whether the RBS 101 can provide or is providing services waived of uplink timing alignment. The broadcast message includes, for example, a revised information element (IE) *prach-Config* in system information block (SIB) information, which includes a Boolean field of *simplified-PRACH.* By reading this field, the UE knows that it can follow the simplified procedure , which means uplink timing alignment can be omitted. In the LTE-A system, the uplink timing alignment requires an ISI and an ICI. The ISI and ICI intend to prevent time-dispersive channel propagation by adjusting the UL timing of different UEs to be within an allocated cyclic prefix (CP) of each OFDMA symbol. While in UDN environment, because of the density of access points, the CP duration exceeds the round trip time (two times of propagation delay).

In step 504, the broadcasting RBS 101 receives a request from a UE 102, for example, through the input unit 401, for resources granted for uplink transmission for the UE. In an example, the UE 102 is connected with the broadcasting RBS 101 and thus is identifiable by the RBS 101. Otherwise, the UE 102 is not connected with the broadcasting RBS 101 and thus is not identifiable by the RBS 101. In both cases, physical layer formats of the requests sent by the UE 102 can be the same.

Generally, the physical layer format of the request at least comprises an encoded sequence for identifying the UE 102.

In one example, an SR of the existing LTE-A system can be used. In another example, an RACH preamble of the existing LTE-A system can be used, regardless of the UE 102 being connected with the broadcasting RBS 101 or not. Both SR and RACH preamble have schemes for identifying the UE 102 in existing LTE-A system, for example, through sequences.

In step 506, the broadcasting RBS 101 sends a response to the UE 102, for example, through the first output unit 402, indicating resources granted for the uplink transmission for the UE. However, timing information that should be contained in the response in existing LTE-A system for the broadcasting RBS 101 to correctly decode data to be uplink transmitted is omitted, and the time uncertainty due to the propagation delay is compensated within the CP. A TA procedure in existing LTE-A system that ensures that the signals sent by multiple UEs are aligned for the RBS 101 to correctly decode data to be uplink transmitted is omitted.

It should be appreciated that physical layer format of the response would be varied, in dependence on connection status between the UE 102 and the RBS 101.

Generally, the physical layer format of the response comprises at least information about uplink resources granted for the UE's transmission. Additionally, if the UE 102 is not connected with the RBS 101, i.e., the RBS 101 doesn't have the information such as identification or location information of the UE 102 thus can't identify the UE 102, then the physical layer format of the response further comprises an identification allocated for the UE 102. The identification can apply RNTI values in existing LTE-A system. Furthermore, the uplink resource granted for the UE 102 in the response is applied by the UE 102 for controlling signallings of connection setup.

In one embodiment, when the UE 102 is not connected with the RBS 101, i.e., the RBS 101 can't identify the UE 102, the physical format of the response may be simplified version of a legacy random access response (RAR), omitting "Timing Advance Command" in it as is in the existing LTE-A system, as is shown in Fig. 10. After receiving the response (in the following step 308), the UE 102 would continue the legacy procedure, by applying the uplink resource which is allocated to the UE 102 indicated in the response, such as the legacy procedure of authentication and authorization, then get connected with the RBS 101.

In another embodiment, when the UE 102 is connected with the RBS 101, i.e., the RBS 101 could uniquely identify the UE 102, and then the physical format of the response may be that of a response to an SR as is in the existing LTE-A system.

It should be appreciated that the request is not limited to the physical format of a scheduling request or a RACH preamble. Other formats of request for uplink resource would apply as appropriate, as long as for example it comprises a sequence for identifying the UE, such as a simplified version of an RACH preamble, for example omitting guard period or shortening the preamble sequence. It should be appreciated that the response is not limited to the response to an SR or simplified RAR. Other formats of response for uplink resource would apply as appropriate, as long as for example it at least comprises the uplink resources granted for the UE.

In one embodiment, as is shown in Fig. 7, when the UE 102 is already connected with the RBS 101, i.e., the RBS 101 may uniquely identify the UE 102, the request is of the physical layer format of, for example, an SR, and sent on a PUCCH as is in the existing LTE-A system. In particular, request is of the physical layer format of PUCCH format 1 (including PUCCH format 1/1a/1b) and PUCCH format 3, as is in existing LTE-A system, using time and frequency resources of an SR. Accordingly, the response is of the physical layer format of, for example, a response to a scheduling request and sent on a PDCCH, as is in the existing LTE-A system, using time and frequency resources of, for example, a response to a scheduling request.

In another embodiment, as is shown in Fig. 8, when the UE 102 is not connected with the RBS 101 yet, i.e., the RBS 101 can't identify the UE 102, the request is of the physical layer format of, for example, a RACH preamble and sent on a PRACH in the existing LTE-A system, using time and frequency resources of, for example, a RACH preamble. Accordingly, the response is of the physical layer format of, for example, an RAR but omitting "Timing Advance Command" in it, as is shown in Fig. 10, and may be sent on a PDSCH, as is in the existing LTE-A system, using time and frequency resources of, for example, an RAR.

It should be appreciated that other newly developed messages can be applied for the request and response, as indicated obove, and their formats could be further unified. Time and frequency resources taken for those request and response may be adjusted accordingly, which preferably can help the RBS to identify whether the UE is connected with it or mot.

As discussed above, the TA procedure in existing LTE-A system can be omitted, thus embodiments described herein will not comprise by a TA command sent from the RBS 101 to the UE 102. Besides, other configurations or settings, such as timer setting in both the RBS 101 and the UE 102 for uplink timing alignment in existing LTE-A system is also omitted. In a word, uplink timing alignment is omitted, and thus the system complexity is reduced and system efficiency is enhanced accordingly.

As a whole, unification for the physical layer format of the request for granted uplink resources and timing alignment omission both contribute to system simplification.

Furthermore, as is shown in Fig. 9, physical layer format of a legacy RACH preamble comprises a cyclic prefix, a preamble sequence and a guard period. A simplified format may comprise cyclic prefix and a shortened preamble sequence, in which way the signaling overheads are diminished. What's more, a legacy will take 6 resource blocks in frequency domain, and 3 subframes in time domain. An SR would only take 1 resource block and 1 subframe. We can see from Fig. 9 that, time and frequency resources taken by an SR is much less than those of a legacy RACH preamble. In existing LTE-A system, the UE 102 has to take an RACH procedure if it is uplink unsynchronized, even if it is connected with the RBS 101. According to the present invention, in such a scenario, the UE 102 may send a request, for example with the physical layer format of a scheduling request or a simplified RACH preamble for granted uplink resources, using time and frequency resources of an SR instead. It is therefore advantageous in such an embodiment of the present invention to make such a request for granted uplink resources instead of following a legacy RACH procedure. Time and frequency resources for sending the request for uplink granted resources are reduced.

Fig. 6 illustrates a block diagram illustrating example physical components of a radio network entity 600. The RBS 101, or the UE 102, according to the present invention, as a radio network entity, has components similar to those of the radio network entity 600. It should be appreciated that these radio network entities can be implemented using components other than those illustrated in the example of Figure 6.

In the example of Fig. 6, the radio network entity 600 comprises a memory 601, a processing system 602, a network interface 603, and a communication medium 604. The memory 601 includes one or more than one computer-usable or computer-readable storage medium capable of storing data and/or computer-executable instructions. Is should be appreciated that the storage medium is preferably a non-transitory storage medium.

The processing system 602 includes one or more than one processing unit. A processing unit is a physical device or article of manufacture comprising one or more integrated circuits that read data and instructions from computer readable media, such as the memory 601, and selectively execute the instructions. In various embodiments, the processing system 602 is implemented in various ways. For example, the processing system 602 can be implemented as one or more than one processing core. In another example, the processing system 602 can comprise one or more than one separate microprocessor. In yet another example embodiment, the processing system 602 can comprise an application-specific integrated circuit (ASIC) that provides specific functionality. In yet another example, the processing system 602 provides specific functionality by using an ASIC and by executing computer-executable instructions.

The network interface 603 is a device or article of manufacture that enables the radio network entity 600 to send data to or receive data from other radio network entities. In different embodiments, the network interface 603 is implemented in different ways. For example, the network interface 603 can be implemented as an Ethernet interface, a token-ring network interface, a fiber optic network interface, a wireless network interface (e.g., Wi-Fi, WiMax, etc.), or another type of network interface.

The communications medium 604 facilitates communication among the hardware components of the network device 600. In the example of Fig. 6, the communications medium 604 facilitates communication among the memory 601, the processing system 602, and the network interface 603. The communications medium 604 can be implemented in various ways. For example, the communications medium 604 can comprise a PCI bus, a PCI Express bus, an accelerated graphics port (AGP) bus, a serial Advanced Technology Attachment (ATA) interconnect, a parallel ATA interconnect, a Fiber Channel interconnect, a USB bus, a Small Computing system Interface (SCSI) interface, or another type of communications medium.

The memory 601 stores various types of data and/or software instructions. For instance, in the example of Figure 6, the instructions in the memory 601 can include those that when executed in the processing system, cause the network device 600 to implement the methods described herein.

While the embodiments have been illustrated and described herein, it will be understood by those skilled in the art that various changes and modifications may be made, and equivalents may be substituted for elements thereof without departing from the true scope of the present technology. In addition, many modifications may be made to adapt to a particular situation and the teaching herein without departing from its central scope. Therefore it is intended that the present embodiments not be limited to the particular embodiment disclosed as the best mode contemplated for carrying out the present technology, but that the present embodiments include all embodiments falling within the scope of the appended claims.

## Claims

1. A method for a user equipment, UE, in an ultra-dense network, comprising:
- sending (304) a request to a radio base station, RBS, for resources to be granted for uplink transmission, the request being of a same physical layer format regardless of the user equipment being connected with the RBS or not;
- receiving (306) a response from the RBS, indicating granted resources for the uplink transmission, the response omitting uplink timing alignment which is used for the RBS to correctly decode data to be uplink transmitted; and compensating a timing uncertainty due to a propagation delay within a cyclic prefix, CP; wherein the CP duration exceeds a round trip time, which is two times of the propagation delay;
- performing (308) the transmission on the granted resources when they are available.

2. The method of Claim 1, before sending the request for resources to be granted for uplink transmission, further comprising:
- receiving (302) a broadcast message indicating omission of uplink timing alignment is supported.

3. The method of Claim 1, wherein in case that the UE is connected with the RBS, the request is transmitted on time and frequency resources for transmitting a scheduling request.

4. The method of Claim 1, wherein the request is transmitted on time and frequency resources which are used by the RBS to identify connection status between the UE and the RBS.

5. The method of Claims 1 to 4, wherein uplink timing alignment between the UE and the RBS is omitted.

6. A user equipment, UE, in an ultra-dense network, comprising:
- a first output unit (202), configured to send a request to a radio base station, RBS, for resources to be granted for uplink transmission, the request being of a same physical layer format regardless of the user equipment being connected with the RBS or not;
- a first input unit (201), configured to receive a response from the RBS, indicating granted resources for the uplink transmission, the response omitting uplink timing alignment which is used for the RBS to correctly decode data to be uplink transmitted; and to compensate a timing uncertainty due to a propagation delay within a cyclic prefix, CP; wherein the CP duration exceeds a round trip time, which is two times of the propagation delay;
- a second output unit (204), configured to perform the transmission on the granted resources when they are available.

7. The UE of Claim 6, further comprising:
- a second input unit (203), configured to receive a broadcast message indicating omission of uplink timing alignment is supported before the first output unit sending the request for resources to be granted for uplink transmission.

8. The UE of Claim 6, wherein in case that the UE is connected with the RBS, the first output unit (202) is configured to send a scheduling request as the request on its time and frequency resources.

9. The UE of Claim 6, wherein in case that the UE is not connected with the RBS, the first output unit (202) is configured to send the request on time and frequency resources which are used by the RBS to identify connection status between the UE and the RBS.

## Patentansprüche

1. Verfahren für eine Benutzereinrichtung, UE, in einem ultradichten Netzwerk, umfassend:
- Senden (304) einer Anforderung von Ressourcen, die zur Uplink-Übertragung zu genehmigen sind, an eine Funkbasisstation, RBS, wobei die Anforderung unabhängig davon, ob die Benutzereinrichtung mit der RBS verbunden ist oder nicht, von einem gleichen Format der physischen Schicht ist;
- Empfangen (306) einer Antwort von der RBS, die genehmigte Ressourcen für die Uplink-Übertragung angibt, wobei die Antwort auf eine Uplink-Timing-Ausrichtung verzichtet, die für die RBS verwendet wird, um Daten, die im Uplink zu übertragen sind, korrekt zu decodieren; und Kompensieren einer Timing-Unsicherheit aufgrund einer Verteilungsverzögerung in einem zyklischen Präfix, CP; wobei die CP-Dauer eine Umlaufzeit überschreitet, die zweimal so groß wie die Verteilungsverzögerung ist;
- Durchführen (308) der Übertragung auf den genehmigten Ressourcen, wenn diese verfügbar sind.

2. Verfahren nach Anspruch 1, vor dem Senden der Anforderung von Ressourcen, die zur Uplink-Übertragung zu genehmigen sind, ferner umfassend:
- Empfangen (302) einer Rundsendenachricht, die angibt, dass ein Verzicht auf eine Uplink-Timing-Ausrichtung unterstützt wird.

3. Verfahren nach Anspruch 1, wobei in dem Fall, dass die UE mit der RBS verbunden ist, die Anforderung auf Zeit- und Frequenzressourcen zum Übertragen einer Planungsanforderung übertragen wird.

4. Verfahren nach Anspruch 1, wobei die Anforderung auf Zeitund Frequenzressourcen übertragen wird, die von der RBS verwendet werden, um den Verbindungsstatus zwischen der UE und der RBS zu identifizieren.

5. Verfahren nach Anspruch 1 bis 4, wobei auf eine Uplink-Timing-Ausrichtung zwischen der UE und der RBS verzichtet wird.

6. Benutzereinrichtung, UE, in einem ultradichten Netzwerk, umfassend:
- eine erste Ausgabeeinheit (202), die konfiguriert ist, um eine Anforderung von Ressourcen, die zur Uplink-Übertragung zu genehmigen sind, an eine Funkbasisstation, RBS, zu senden, wobei die Anforderung unabhängig davon, ob die Benutzereinrichtung mit der RBS verbunden ist oder nicht, von einem gleichen Format der physischen Schicht ist;
- eine erste Eingabeeinheit (201), die konfiguriert ist, um eine Antwort von der RBS, die genehmigte Ressourcen für die Uplink-Übertragung angibt, zu empfangen, wobei die Antwort auf eine Uplink-Timing-Ausrichtung verzichtet, die für die RBS verwendet wird, um Daten, die im Uplink zu übertragen sind, korrekt zu decodieren und um eine Timing-Unsicherheit aufgrund einer Verteilungsverzögerung in einem zyklischen Präfix, CP, zu kompensieren; wobei die CP-Dauer eine Umlaufzeit überschreitet, die zweimal so groß wie die Verteilungsverzögerung ist;
- eine zweite Ausgabeeinheit (204), die konfiguriert ist, um die Übertragung auf den genehmigten Ressourcen durchzuführen, wenn diese verfügbar sind.

7. UE nach Anspruch 6, ferner umfassend:
- eine zweite Eingabeeinheit (203), die konfiguriert ist, um eine Rundsendenachricht, die angibt, dass ein Verzicht auf eine Uplink-Timing-Ausrichtung unterstützt wird, zu empfangen, bevor die erste Ausgabeeinheit die Anforderung von Ressourcen, die zur Uplink-Übertragung zu genehmigen sind, sendet.

8. UE nach Anspruch 6, wobei in dem Fall, dass die UE mit der RBS verbunden ist, die erste Ausgabeeinheit (202) konfiguriert ist, um eine Planungsanforderung als die Anforderung auf ihren Zeit- und Frequenzressourcen zu senden.

9. UE nach Anspruch 6, wobei in dem Fall, dass die UE nicht mit der RBS verbunden ist, die erste Ausgabeeinheit (202) konfiguriert ist, um die Anforderung auf Zeit- und Frequenzressourcen zu senden, die von der RBS verwendet werden, um den Verbindungsstatus zwischen der UE und der RBS zu identifizieren.

## Revendications

1. Procédé pour un équipement utilisateur, UE, dans un réseau ultra-dense, comprenant :
- l'envoi (304) d'une demande à une station de base radio, RBS, pour des ressources à accorder pour une transmission en liaison montante, la demande étant d'un même format de couche physique sans tenir compte que l'équipement utilisateur soit ou non connecté avec la RBS ;
- la réception (306) d'une réponse depuis la RBS, indiquant des ressources accordées pour la transmission en liaison montante, la réponse omettant un alignement de temporisation de liaison montante qui est utilisé pour permettre à la RBS de décoder correctement des données à transmettre en liaison montante ; et la compensation d'une incertitude de temporisation due à un délai de propagation au sein d'un préfixe cyclique, CP ; dans lequel la durée de CP dépasse un temps d'aller-retour, qui vaut deux fois le délai de propagation ;
- la mise en œuvre (308) de la transmission sur les ressources accordées lorsqu'elles sont disponibles.

2. Procédé selon la revendication 1, avant envoi de la demande pour des ressources à accorder pour une transmission en liaison montante, comprenant en outre :
- la réception (302) d'un message de diffusion indiquant qu'une omission d'alignement de temporisation de liaison montante est supportée.

3. Procédé selon la revendication 1, dans lequel dans le cas où l'UE est connecté avec la RBS, la demande est transmise sur des ressources de temps et de fréquence pour transmettre une demande de planification.

4. Procédé selon la revendication 1, dans lequel la demande est transmise sur des ressources de temps et de fréquence qui sont utilisées par la RBS pour identifier un état de connexion entre l'UE et la RBS.

5. Procédé selon les revendications 1 à 4, dans lequel un alignement de temporisation de liaison montante entre l'UE et la RBS est omis.

6. Équipement utilisateur, UE, dans un réseau ultra-dense, comprenant :
- une première unité de sortie (202), configurée pour envoyer une demande à une station de base radio, RBS, pour des ressources à accorder pour une transmission en liaison montante, la demande étant d'un même format de couche physique sans tenir compte que l'équipement utilisateur soit ou non connecté avec la RBS ;
- une première unité d'entrée (201), configurée pour recevoir une réponse depuis la RBS, indiquant des ressources accordées pour la transmission en liaison montante, la réponse omettant un alignement de temporisation de liaison montante qui est utilisé pour permettre à la RBS de décoder correctement des données à transmettre en liaison montante et pour compenser une incertitude de temporisation due à un délai de propagation au sein d'un préfixe cyclique, CP ; dans lequel la durée de CP dépasse un temps d'aller-retour, qui vaut deux fois le délai de propagation ;
- une deuxième unité de sortie (204), configurée pour mettre en œuvre la transmission sur les ressources accordées lorsqu'elles sont disponibles.

7. UE selon la revendication 6, comprenant en outre :
- une deuxième unité d'entrée (203), configurée pour recevoir un message de diffusion indiquant qu'une omission d'alignement de temporisation de liaison montante est supportée avant que la première unité de sortie n'envoie la demande pour des ressources à accorder pour une transmission en liaison montante.

8. UE selon la revendication 6, dans lequel dans le cas où l'UE est connecté avec la RBS, la première unité de sortie (202) est configurée pour envoyer une demande de planification en guise de demande sur ses ressources de temps et de fréquence.

9. UE selon la revendication 6, dans lequel dans le cas où l'UE n'est pas connecté avec la RBS, la première unité de sortie (202) est configurée pour envoyer la demande sur des ressources de temps et de fréquence qui sont utilisées par la RBS pour identifier un état de connexion entre l'UE et la RBS.
